# EUROPEAN PATENT APPLICATION

(11) **EP 4 542 031 A1**
(43) Date of publication of application: **23.04.2025**
(21) Application number: 23383069.4
(22) Date of filing: 19.10.2023
(51) Int. Cl.: F03D 17/00

(54) **METHOD FOR OPERATING A WIND TURBINE AND WIND TURBINE**

(71) Applicant: Nordex Energy Spain, S.A.U., 31395 Barasoain (Navarra) (ES); Nordex Energy SE & Co. KG, 22419 Hamburg (DE)
(72) Inventor: Gellermann, Jan, 22419 Hamburg, (DE); Gil, Pablo, 31395 BARASOAIN (ES); Manitz, Jan Erik, 22419 Hamburg (DE)
(74) Representative: Völkl Siebenson Patentanwälte - Partnerschaft mbB

(57) **Abstract**

According to an embodiment, the method is for operating a wind turbine (100) having a rotatable component (1 to 4) and N drives (di) for rotating the rotatable component by exerting torques, wherein N ≥ 2. The method comprises a step of providing first information (I1) which is representative of at least one operation parameter (P_i) of each drive. In a further step, second information (I2) is determined depending on the first information. The second information is representative of an operation parameter average (Pa, Pa_I, Pa_II) averaged over at least two drives. Third information (I3) is determined depending on the first and the second information, wherein the third information is representative of whether the operation parameter of at least one drive differs from the operation parameter average by more than a defined threshold (T). If this is the case, a first measure (M1) is executed. The first measure is configured to cause maintenance of the at least one drive. Additionally or alternatively, the first measure is configured to cause a change of the operation of the wind turbine.

## Description

The present disclosure relates to a method for operating a wind turbine. Furthermore, the disclosure relates to a computer program, a computer-readable data carrier, a control system and a wind turbine.

Wind turbines are widely known and are used to convert wind energy into electrical energy. Some components of the wind turbine, like the nacelle or the rotor blades, need to be rotated during operation. Failure of the system for rotating these components increases the downtime of the wind turbine and reduces its annual energy production (AEP).

One object to be achieved is to provide a method which contributes to an efficient operation of the wind turbine, particularly with a low downtime or a high AEP, respectively. Further objects to be achieved are to provide a computer program, a computer-readable data carrier, a control system and a wind turbine for executing such a method.

First, the method for operating a wind turbine is specified.

According to an embodiment, the method is for operating a wind turbine having a rotatable component and N drives for rotating the rotatable component by exerting torques. N is an integer greater or equal to 2. The method comprises a step of providing first information which is representative of at least one operation parameter of each drive. In a further step, second information is determined depending on the first information. The second information is representative of an operation parameter average averaged over at least two drives. Third information is determined depending on the first and the second information, wherein the third information is representative of whether the operation parameter of at least one drive differs from the operation parameter average by more than a defined threshold. If this is the case, i.e. if the third information is representative of the operation parameter of at least one drive to differ from the operation parameter average by more than the defined threshold, a first measure is executed. The first measure is configured to cause maintenance of the at least one drive. Additionally or alternatively, the first measure is configured to cause a change of the operation of the wind turbine.

The described method enables an early recognition of damage of a drive or incipient damage of the drive. By reacting properly, e.g. by scheduling maintenance or by changing the operation, an emergency shutdown of the wind turbine can be avoided and, with this, downtime can be reduced.

The method specified herein is, in particular, a computer-implemented method, i.e. is performed with the help of a computer or a processor.

Herein, when information is representative of a certain quantity or certain quantities, this means that the quantity or quantities can be extracted from the information, either directly, or the quantity/quantities can at least be derived from the information. In other words, the quantity/quantities is/are stored in the information, or at least data are stored in the information, from which the quantity/quantities can be derived or determined or calculated, respectively.

Furthermore, here and in the following, information is, in particular, electronic information, like electronic data.

For example, the number N of drives assigned to the rotatable component is 2 or 4 or 6. The drives may each comprise an electric motor. Moreover, each drive may comprise a gearbox and a pinion. The electric motors apply an input rotational speed and an input torque to the gearbox, which is thereby transformed to an output rotational speed and an output torque and is applied to the pinion. By way of example, the transmission ratio between the input rotational speed and the output rotational speed of the gearbox of each drive is at least 100 or at least 1000. That is, the electric motor, on one side of the gearbox, rotates at least 100 or at least 1000 times faster than the pinion on the other side of the gearbox.

The drives may be attached to the rotatable component so that they rotate together with the rotatable component. For example, the drives then mesh with and exert torques to a non-rotatable element which in turn may cause the rotation of the rotatable component. Alternatively, the drives are rotationally fixed and do not rotate together with the rotatable component. The drives may then mesh with the rotatable component and may exert torques to it, which can cause its rotation.

The operation parameter of a drive is a parameter indicative of the operation of the drive. The operation parameter is, in particular, indicative of a physical quantity of the respective drive during operation of that drive. Preferably, the operation parameters of the drives are indicative for the same physical quantity or quantities so that they are comparable with each other. The first information may be determined depending on measurements taken during operation of the wind turbine.

The operation parameter average is the average of operation parameters of two or more drives. It is thereby averaged over operation parameters that are indicative of the same physical quantity. The operation parameter average may be the average over all drives assigned to the rotatable component or only over some of those drives.

The third information is representative of whether the operation parameter of at least one drive differs from the operation parameter average by more than a defined threshold. The defined threshold may be fixed or maybe variable. For example, the defined threshold is chosen to be between 1% and 50% or between 5% and 30% of the operation parameter average. The drive or the drives for which this is valid are herein also called "critical drive" or "critical drives", since the crossing of the threshold can indeed indicate damage or incipient damage of the drive(s).

The first, second and third information may be provided or determined repeatedly, e.g. at least once per minute or at least once per hour or at least once per day.

The first measure may be executed automatically when the third information is representative of at least one drive to differ from the operation parameter average by more than the defined threshold.

The first measure may be configured to cause maintenance of the at least one drive. By way of example, the first measure comprises (re)scheduling maintenance of the at least one drive. This may happen automatically or may be done manually in reaction to the execution of the first measure.

The first measure may be configured to cause a change of the operation of the wind turbine, for example to an operation which is more gentle to the at least one drive. "More gentle" means, for example, that a maximum electric current with which the electric motor of the drive is operated or the maximum allowed torque exerted by the drive is reduced or the at least one drive is permanently disabled, i.e. it is not activated/controlled anymore. The first measure may be configured to cause an automatic change of the operation of the wind turbine.

According to a further embodiment, the at least one operation parameter is the temperature of the electric motor of the respective drive. The temperature may be determined with the help of a temperature sensor assigned to the electric motor.

According to a further embodiment, the at least one operation parameter is the electric current with which the electric motor of the respective drive is operated.

According to a further embodiment, the at least one operation parameter is a torque of the respective drive, e.g. the input torque or the output torque of the gearbox.

According to a further embodiment, the at least one operation parameter is a time-averaged and/or filtered parameter. For example, the operation parameter is averaged over at least 10 seconds or at least one minute or at least one hour. The filter may be configured to reduce noise and/or outliers.

According to a further embodiment, the first measure is configured to cause the generation of a warning signal for an operator so that the operator can (re)schedule maintenance of the at least one drive. For example, the first measure comprises the generation of an electric signal. When the electric signal is received by a warning device, the warning device generates a noticeable warning signal, like a visual or acoustic warning signal. The warning device may be a display and/or a loudspeaker. When the operator notices this warning signal, he/she knows which drive is damaged or that damage is imminent and maintenance of that drive should be (re) scheduled.

According to a further embodiment, if the third information is representative of the operation parameter of one drive, particularly of only one drive, to differ from the operation parameter average by more than the defined threshold, the first measure is configured to cause a change of the operation of the wind turbine from a first operation mode in which the N drives are used to control the position of the rotatable component, into a second operation mode in which the one (critical) drive is permanently disabled and only the remaining N-1 drives are used to control the position of the rotatable component. In other words, when executing the first operation mode, which is, e.g., the nominal operation mode, the wind turbine comprises and uses N drives for rotating the rotatable component and/or for keeping the rotatable component in position. When executing the second operation mode, which is, e.g., an auxiliary operation mode, the wind turbine uses N-1 drives for rotating the rotatable component and/or for keeping the rotatable component in position.

In the case that the third information is representative of two or more drives being critical drives, only the drive for which the deviation of the operation parameter from the operation parameter average is largest is permanently disabled, for example. Alternatively, in this case, the first measure may be configured to cause a shutdown of the wind turbine or may be configured to cause a change from the first into a third operation mode in which two or more of the critical drives are permanently disabled and only the remaining drives are used to control the position of the rotatable component.

According to a further embodiment, the first measure is configured to cause an automatic change from the first to the second operation mode. That is, when the wind turbine is actually operated and the first measure is executed, the operation of the wind turbine automatically changes from the first operation mode to the second operation mode, i.e. without human action. By way of example, the first measure comprises a change of a setting in a control system of the wind turbine. The result of the change of the setting, in turn, may be that the critical drive is no longer provided with electric control signals. For example, changing the setting in the control system results in the control system ignoring the critical drive. The control system then operates, for example, as if only N-1 drives were available for rotating the rotatable component.

According to a further embodiment, the first measure is configured to disable a power supply of the critical drive. For example, IGBTs used for operating the critical drive are not energized anymore. For example, the first measure comprises generating an output signal which disables the energization of the IGBTs. A drive brake or motor brake, respectively, of the critical drive may also be turned off such that it does not break the drive or motor.

According to a further embodiment, the first measure is configured to indicate to an operator that the operation of the wind turbine has to be changed, e.g. to a more gentle operation for the critical drive, e.g. has to be changed from the first to the second operation mode. For example, executing the first measure comprises the generation of an output signal. When the output signal is received by a warning device, like a display or a loudspeaker, the warning device generates a noticeable warning signal, like a visual or acoustic warning signal. When the operator notices this warning signal, he/she knows that one of the drives is probably damaged and that the operation mode should now be (manually) changed.

According to a further embodiment, the first measure comprises changing a control parameter for the wind turbine in order to change the operation of the wind turbine, particularly to an operation which is more gentle to the at least one drive. The control parameter is, for example, a rotor speed setpoint and/or a generator power setpoint and/or a maximum allowed wind speed and/or a maximum allowed external torque..

A setpoint herein defines a certain target (value) to be achieved when operating the wind turbine. For example, the rotor speed setpoint is the target value of the rotational speed of the rotor of the wind turbine or the maximum allowed rotational speed. The generator power setpoint may be the target value of the power generated by the generator of the wind turbine or the maximum allowed power generated by the generator.

For example, when the rotational speed of the rotor deviates from or exceeds the rotor speed setpoint, pitch angles of the rotor blades are adjusted in order to keep the rotational speed of the rotor at or below the rotor speed setpoint. When the power generated by the generator deviates from or exceeds the generator power setpoint, a counter torque on the load side may be adjusted in order to keep the generated power at or below the generator power setpoint.

By way of example, the first measure comprises a reduction of the rotor speed setpoint and/or the generated power setpoint. For example, the rotor speed setpoint and/or the generator power setpoint are changed by at least 10% or at least 25% or at least 50% from the value used before.

According to a further embodiment, the first measure comprises changing a maximum allowed wind speed, particularly reducing the maximum allowed wind speed. For example, when the wind speed, which may be obtained by measurements, exceeds the maximum allowed wind speed, the wind turbine is shut down. For example, the maximum allowed wind speed is changed by at least 10% or at least 25% or at least 50% from the value used before.

According to a further embodiment, the first measure comprises changing a maximum allowed external torque, particularly reducing the maximum allowed external torque. The external torque is a torque acting on the rotatable component, for example, induced by the wind acting on the wind turbine and/or is induced by vibrations of the rotatable component, for example resulting from the rotation of the rotor of the wind turbine and/or resulting from changing wind speeds and/or resulting from tower movement. The external torque is, in particular a torque which is not induced by the drives but against which the drives have to fight. For example, the maximum allowed external torque is changed by at least 10% or at least 25% or at least 50% from the value used before. If the external torque exceeds the maximum allowed external torque, the wind turbine may be shut down or a power mode may be changed. A power mode is a certain combination of the rotor speed setpoint and the generator power setpoint and, optionally, of a maximum allowed pitch angle of the rotor blades.

According to a further embodiment, the method further comprises providing fourth information which is representative of a position setpoint of the rotatable component and a step of determining operating setpoints for the drives depending on the fourth information such that, when the drives are operated according to the operating setpoints, the drives bring or keep the rotatable component at the position setpoint by exerting torques. The position setpoint is the target value of the position of the rotatable component. The operating setpoint defines the target operation of a drive. An operating setpoint for a drive is, in particular, equivalent to control/operation information for the drive.

The position setpoint is, in particular, an angle between 0° and 360°. To bring or keep the rotatable component at the position setpoint means that the drives are operated such that the difference between the actual position of the rotatable component and the position setpoint is minimized (for example with the help of a negative feedback loop). In other words, the rotatable component is kept in or brought to a position which corresponds to the position setpoint.

According to a further embodiment, the method comprises a step of providing fifth information which is representative of the actual torque difference between the actual torques exerted by the drives. By way of example, the actual electric currents with which the electric motors are actually operated are determined and these currents are then stored in the fifth information. The actual electric currents may be determined from the PWM-signals transmitted to the drives by using a motor model. Indeed, the electric current is proportional to the torque so that the difference between the currents of the electric motors is representative of the difference between the torques. Alternatively, it is possible to directly measure the torques provided by the drives or the torque difference and to store these measurements in the fifth information.

According to a further embodiment, the method further comprises a step of providing sixth information which is representative of a torque difference setpoint between the torques exerted by the drives. The torque difference setpoint is, in particular, different from zero. The torque difference setpoint is the target value of the absolute value of the torque difference between the torques of two drives. In the case of more than two drives, the sixth information may be representative of several torque difference setpoints. For example, the torque difference setpoint for each drive then refers to the torque difference between the drive and a master drive.

According to a further embodiment, the operating setpoints are determined also depending on the fifth and the sixth information, namely by using a feedback loop, particularly a negative feedback loop, with the fifth and the sixth information as input information so that the difference between the torque difference setpoint and the actual torque difference is minimized. Particularly, the fifth and the sixth information are repeatedly or continuously provided and compared. Depending on this, the operating setpoints are repeatedly or continuously determined or adjusted, respectively, in order to make the actual torque difference match the torque difference setpoint.

The provision of the fourth and/or the fifth and/or the sixth information as well as determining the operating setpoints is preferably done before and after executing the first measure.

According to a further embodiment, the wind turbine comprises at least four drives. The drives are assigned to the at least two different groups so that each group is assigned at least two drives.

According to a further embodiment, the second information is determined such that it is representative of an operation parameter average for each group. The operation parameter average of a group is the average of the operation parameters of only those drives which are assigned to that group.

According to a further embodiment, the operating setpoints are determined such that, when the drives are operated according to the operating setpoints, all drives assigned to the same group always exert the same torques. Drives assigned to different groups exert different torques, preferably with a difference which matches the torque difference setpoint as well as possible.

According to a further embodiment, for determining the third information, the operation parameter of each drive is compared only to the operation parameter average of the group to which it is assigned. That is, for determining the third information, it is determined whether the operation parameter differs from the operation parameter average of the group to which the drive is assigned by more than the defined threshold.

According to a further embodiment, the at least one drive, i.e. the at least one critical drive, is the master drive before execution of the first measure. "Master drive" means that the operating setpoints are determined such that, when the drives are operated according to the operating setpoints, the value of the torque exerted by the master drive is always greater than or at least equal to the value of the torque exerted by the one or more other drives. Particularly, the operating setpoints for the other drive(s) or the torques to be exerted by the other drives, respectively, are determined depending on the operating setpoint or the torque of the master drive.

"Value of the torque" may herein be the numeric value (real number) or the absolute value (magnitude) of the torque. The numerical value takes into account the sign so that a torque value of 0 Nm is larger than a torque value of -10 Nm, for example.

According to a further embodiment, the first measure comprises changing the master drive. Particularly, another drive than a critical drive is set to be the master drive. In this way, the at least one drive, i.e. the at least one critical drive, is operated more gently. For example, a drive from another group is then set to be the master drive.

According to a further embodiment, the rotatable component is a component of a yaw system of the wind turbine. For example, the rotatable component is a nacelle of the wind turbine or a carrier for a nacelle or a yaw bearing.

According to a further embodiment, the rotatable component is a component of a pitch system of the wind turbine. For example, the rotatable component is a rotor blade of the wind turbine or a carrier for a rotor blade or a pitch bearing.

According to a further embodiment, the wind turbine is actually operated, e.g. it generates electrical power. The operation may be in the first operation mode. Then, the first measure is executed because the third information is representative of the operation parameter of at least one drive to differ from the operation parameter average by more than the defined threshold. The first measure leads, for example, to a change of the operation of the wind turbine as described above. Additionally or alternatively, the first measure leads to (re)scheduling of maintenance.

According to a further embodiment, the method further comprises executing a second measure in reaction on the first measure, wherein the second measure is performing maintenance of the at least one drive. Maintenance comprises, for example, replacement of the at least one drive or repairing the at least one drive. The second measure is, for example, executed at the latest half a year or at the latest three months after executing the first measure.

Next, the computer program, the computer-readable data carrier and the control system are specified.

According to an embodiment, the computer program comprises instructions which, when the program is executed by a control system, cause the control system to carry out the method for operating a wind turbine according to any one of the embodiments described herein.

According to an embodiment, the computer-readable data carrier has the computer program stored thereon.

According to an embodiment, the control system comprises means configured to execute the method for operating a wind turbine according to any one of the embodiments described herein. Particularly, the method is carried out when the above-mentioned computer program is executed by the control system.

The control system may comprise at least one processor and/or at least one programmable logic controller, plc for short. Additionally, the control system may comprise one or more drive control modules which convert operating setpoints into actual electric control signals, e.g. PWM signals, with which drives are then controlled. The control system may be part of the wind turbine.

According to a further embodiment, the control system comprises means, for example sensors, with the help of which the at least one operation parameter of each drive can be determined. Particularly, the control system may comprise means with the help of which the temperatures of the electric motors of the drives can be determined and/or the electric currents with the help of which the electric motors are operated can be determined and/or with the help of which the torques of the drives can be determined. For example, the control system comprises a temperature sensor and/or a current sensor for each drive.

Next, the wind turbine is specified.

According to an embodiment, the wind turbine comprises a rotatable component as well as N drives for rotating the rotatable component by exerting torques. N is an integer greater or equal to 2. Furthermore, the wind turbine comprises the control system according to any of the embodiments described herein. Thus, the wind turbine is, in particular, configured to execute the method according to any of the embodiments described herein. All features disclosed for the method are therefore also disclosed for the wind turbine and vice versa.

According to a further embodiment, the control system is signally connected to the drives in order to enable an operation of the drives according to the operating setpoints generated by the control system.

Hereinafter, the method for operating a wind turbine, the control system and the wind turbine will be explained in more detail with reference to the drawings on the basis of exemplary embodiments. The accompanying figures are included to provide a further understanding. In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.
Figure 1 shows an exemplary embodiment of the wind turbine,
Figure 2 shows an exemplary embodiment of a yaw system in a perspective view,
Figure 3 shows an exemplary embodiment of a yaw system in a cross-sectional view,
Figures 4 and 9 show an exemplary embodiment of a yaw system in a top view,
Figures 5 and 8 show flowcharts of exemplary embodiments of the method for operating a wind turbine,
Figure 6 shows an exemplary embodiment of the control system,
Figure 7 shows a diagram of operation parameters of several drives,
Figure 10 shows an exemplary embodiment of an operation of a drive control module.

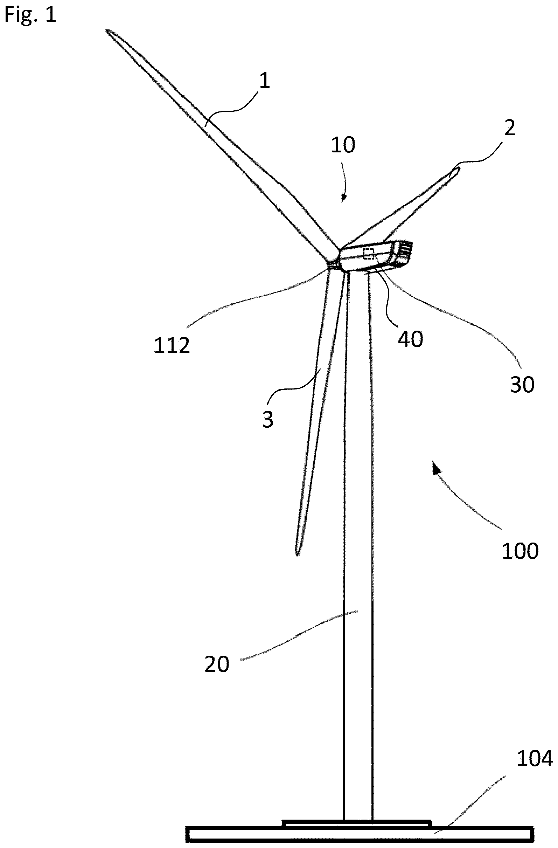

Figure 1 shows a wind turbine 100 which comprises a tower 20. The tower 20 is fixed to the ground by means of a foundation 104. A nacelle 40 is rotatably mounted at one end of the tower 20, opposite to the ground. The nacelle 40 comprises, for example, a generator which is coupled to a rotor 10 via a gearbox (not shown). The rotor 10 comprises three (wind turbine) rotor blades 1, 2, 3, which are arranged on a rotor hub 112, said rotor hub 112 being connected to a rotor shaft (not shown).

During operation, the rotor 10 is set in rotation by an air flow, for example wind. This rotational movement is transmitted to the generator via the drive train comprising, inter alia, the rotor shaft and the gearbox. The generator converts the mechanical energy of the rotor 10 into electrical energy.

For optimizing the energy output of the wind turbine 100, the nacelle 40 has to be rotated into the wind. Moreover, the pitch angles of the rotor blades 1, 2, 3 have to be set according to the wind speed. This is done with the help of drives (not shown) which rotate the rotor blades 1, 2, 3 and the nacelle 40 to a respective target position. In order to control and operate the drives, the wind turbine comprises a control system 30 which determines operating setpoints with which the drives are operated. The control system 30 is located in the nacelle 40.

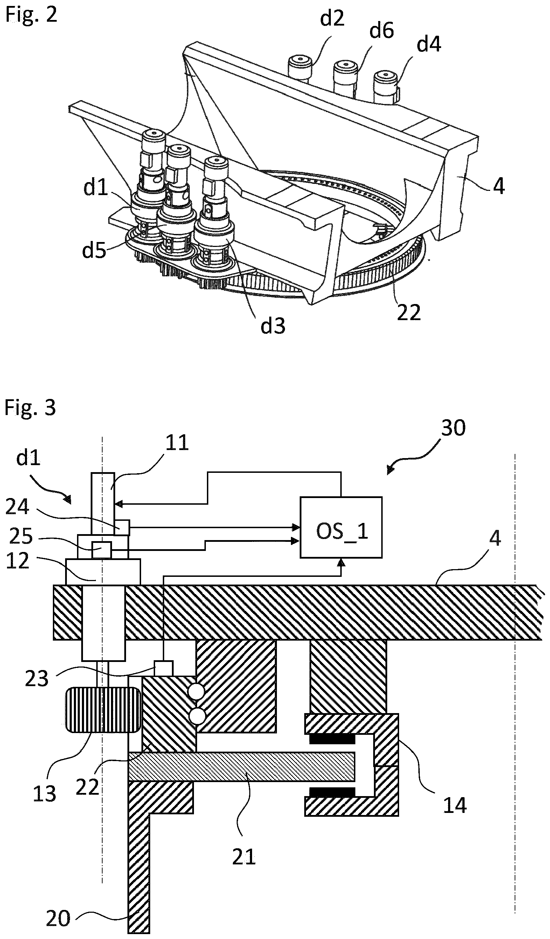

Figure 2 shows a detailed view of an exemplary embodiment of a yaw system, e.g. the yaw system of the wind turbine of figure 1. Here, the nacelle 40 itself is not shown, only the carrier 4 for the nacelle 40. This carrier 4 is rotatable together with the nacelle 40. In order to rotate the carrier 4, six drives d1 to d6 are mounted on the carrier 4. These drives d1 to d6 mesh with a yaw bearing 22 of the yaw system. The yaw bearing 22 is fixed with respect to, for example, the tower 20. The carrier 4 is rotated when the drives d1 to d6 rotate.

Figure 3 shows an exemplary embodiment of the yaw system, e.g. of the yaw system of figure 2, in more detail and in a cross-sectional view. The yaw bearing 22 is mounted on the tower 20. Moreover, a brake disk 21 is mounted to the tower 20. A brake caliper 14 is fixed to the carrier 4 and can be used to stop rotation of the carrier 4 and/or to hold the carrier 4 in position. The brake disk 21 and the brake caliper 14 are optional.

Figure 3 shows only one of the drives, namely drive d1. All other drives may be formed identically. Drive d1 comprises an electric motor 11. The electric motor 11 is operated depending on an operating setpoint OS_1 generated by the control system 30. Depending on the operating setpoint OS_1, drive d1 is rotated and thereby exerts a certain torque. The rotational speed and torque of the electric motor 11 is transmitted to a pinion 13 of the drive d1 with the help of a gearbox 12. The transmission ratio of the gearbox 12 is, for example, at least 100 or at least 500 so that the electric motor 11 rotates much faster than the pinion 13. On the other hand, the torque exerted by the pinion 13 onto the yaw bearing 22 is much larger than the torque provided by the electric motor 11.

In order to determine the actual position of the rotatable carrier 4, the control system 30 comprises an incremental encoder 23. The measurements taken with the help of the incremental encoder 23 are sent to and processed by the control system 30. Moreover, another incremental encoder 24 is provided, with the help of which the actual rotational speed of the electric motor 11 of drive d1 is determinable. These measurements are also sent to and processed by the control system 30. Furthermore, a temperature sensor 25 is assigned to the electric motor 11 with the help of which the temperature of the electric motor 11 can be determined. Also the measurements of the temperature sensor 25 are sent to the control system 30 and are processed thereby. An individual incremental encoder 24 and an individual temperature sensor 25 may be provided for each drive d1 to d6.

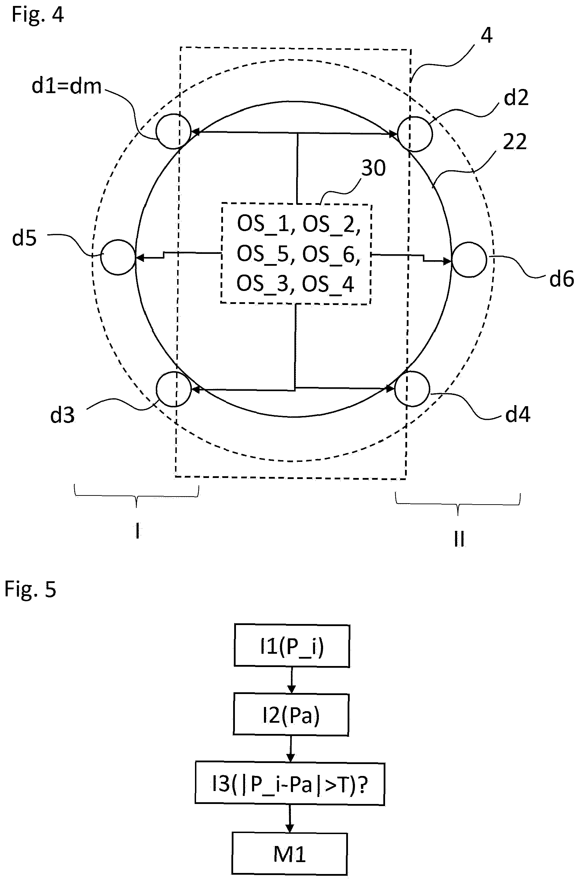

Figure 4 shows an exemplary embodiment of a yaw system, e.g. of the yaw system of figures 2 and 3, in top view. As can be seen here, all six drives d1 to d6, di for short, are operated according to corresponding operating setpoints OS_1 to OS_6, OS_i for short. The operating setpoints OS_i are determined by the control system 30. When the drives di are operated according to the operating setpoints OS_i, the carrier 4 is brought or kept at the position at a position setpoint by exerting torques. The position setpoint may be determined by the control system 30 and may depend on different parameters, like the wind direction. Moreover, the operating setpoints OS_i may be configured such that different drives d1 to d6, di for short, exert different torques.

A possible way to operate the yaw system of figures 2 to 4 is to group the drives into two groups. The left group I or first group I, respectively, comprises drives d1, d3 and d5. The right group II or second group II, respectively, comprises drives d2, d4 and d6. Drive d1 is the master drive dm. The torques exerted by all other drives may be selected depending on the torque exerted by master drive d1. For example, drives d3 and d5 are operated such that they always exert the same torques as drive d1. The drives of the right group II, i.e. drives d2, d4 and d6, may be operated such that they always exert the same torques, but torques with values which are lower or at most the same as the value of the torque of drive d1. The torques of the left side and of the right side may differ from each other by a torque difference setpoint, e.g. of 10 Nm.

During operation, the drives di are highly stressed. It can therefore be useful to detect damage or an imminent damage of a drive as soon as possible and to react appropriately. This is achieved by the method for operating a wind turbine as described herein.

Figure 5 shows a flowchart of a first exemplary embodiment of the method for operating a wind turbine, e.g. the wind turbine 100 described in connection with figures 1 to 4. In this method, first information I1 is provided which is representative of at least one operation parameter P_1 to P_6, P_i for short, of each drive di. Then, second information I2 is determined depending on the first information I1, wherein the second information I2 is representative of an operation parameter average Pa averaged over all six drives di. In a further step, third information I3 is determined depending on the second information I2, wherein the third information I3 is representative of whether the operation parameter P_i of at least one drive di differs from the operation parameter average Pa by more than a defined threshold T. As an example, this is the case for drive d1, which is therefore considered to be critical. Due to this, a first measure M1 is executed which is configured to cause maintenance of the drive d1 and/or which is configured to cause a change of the operation of the wind turbine, particularly to an operation which is gentler to drive d1. For example, execution of the first measure M1 may include scheduling a maintenance operation and be may comprise a reduction of the rotor speed setpoint and/or a reduction of the generator power setpoint and/or a reduction of the maximum allowed wind speed and /or a reduction of the maximum allowed external torque in order to limit the maximum loads that the yaw system has to stand.

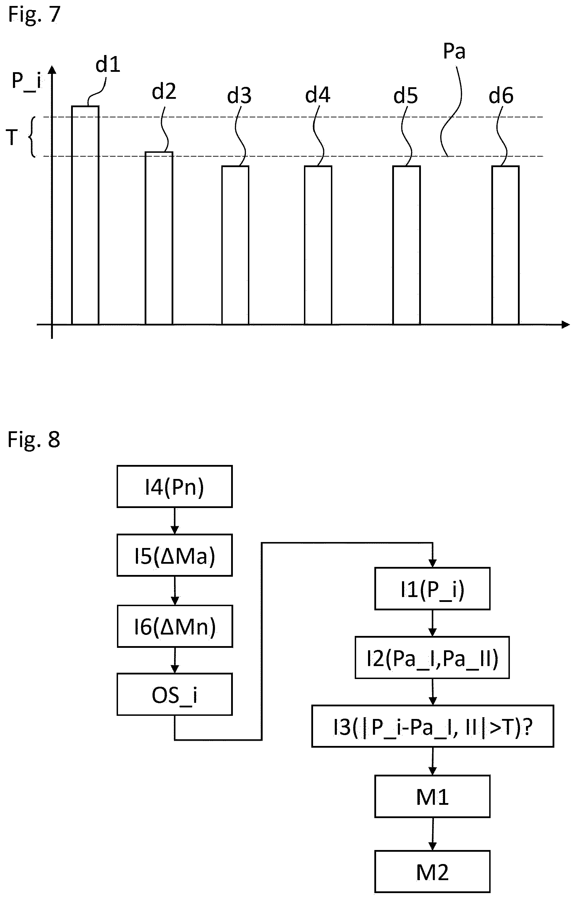

Figure 7 shows a diagram illustrating the determination of the third information 13. The y-axis shows the operation parameter P_i, which could be the temperature of each electric motor 11 measured with the help of the above-described temperature sensor 25. The operation parameter P_i could also be the electric current with which the electric motor 11 is operated. Such an operation parameter P_i is provided for each drive di. The operation parameter average Pa being the average of the six operation parameters P_i is indicated by the lower horizontal dashed line. The operation parameter average plus the defined threshold T is indicated by the upper horizontal dashed line. As one can see, the operation parameter P_1 of the drive d1 lies above this horizontal dashed line, which indicates damage or incipient damage of drive d1.

Figure 8 shows a flowchart of a further exemplary embodiment of the method for operating a wind turbine, e.g. the wind turbine 100 described in connection with figures 1 to 4. Here, fourth information I4 is provided which is representative of a position setpoint Pn of the carrier 4. Furthermore, fifth information I5 is provided which is representative of the actual torque difference ΔMa between the actual torques exerted by the drives di, e.g. between the drives of the first group I and the second group II. Sixth information I6 is provided which is representative of a torque difference setpoint ΔMn between the torques exerted by the drives, e.g. between the torques exerted by the drives of the first group I and the second group II. The torque difference setpoint ΔMn is, for example, 10 Nm. In a further step, operating setpoints OS_i for the drives di are determined depending on the fourth I4, the fifth I5 and the sixth I6 information such that the drives di bring or keep the carrier 4 at the position setpoint Pn by exerting torques. The operating setpoints OS_i are determined using a feedback loop with the fifth I5 and the sixth I6 information as input information so that the difference between the torque difference setpoint ΔMn and the actual torque difference ΔMa is minimized.

During operation according to the operating setpoints OS_i, the first information I1 is provided. The second information I2 is then determined depending on the first information I1, wherein the second information I2 is now determined such that it is representative of an operation parameter average Pa_I, Pa_II individually for each of the two groups I, II. Depending on the first I1 and the second information I2, the third information I3 is determined which is representative of whether the operation parameter P_i of at least one of the drives di differs from the operation parameter average Pa_I, Pa_II of the assigned group by more than the defined threshold T. Again, as an example, this is the case for drive d1, and, accordingly, the first measure M1 is executed. For example, the first measure M1 comprises an automatic generation of a warning signal for an operator that drive d1 should be serviced. The operator then schedules maintenance of drive d1. The maintenance is executed as a second measure M2. The execution of the first measure M1 may also cause a change of operation of the wind turbine as described before.

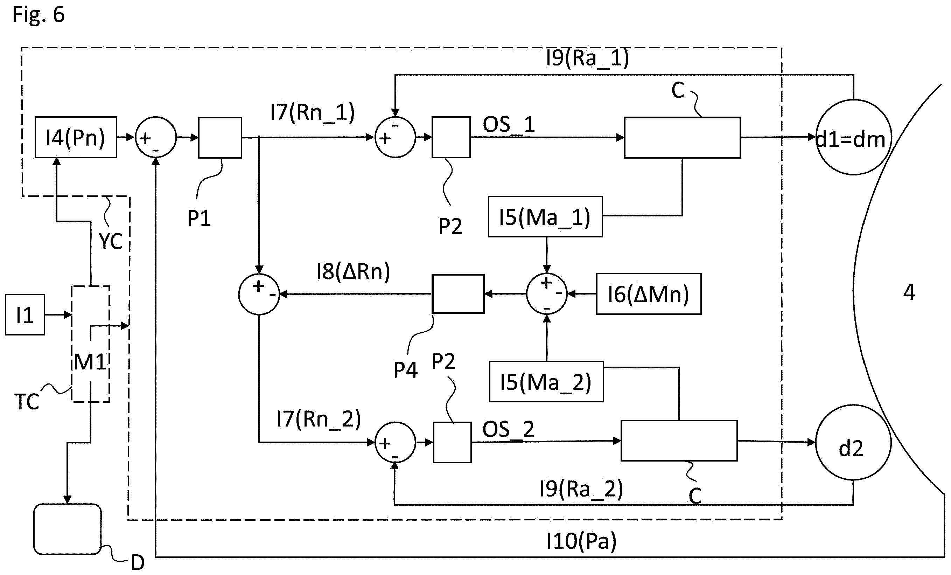

Figure 6 shows an exemplary embodiment of the control system. This control system enables the operation of the drives di as described herein. For better illustration, only the drives d1 and d2 are shown.

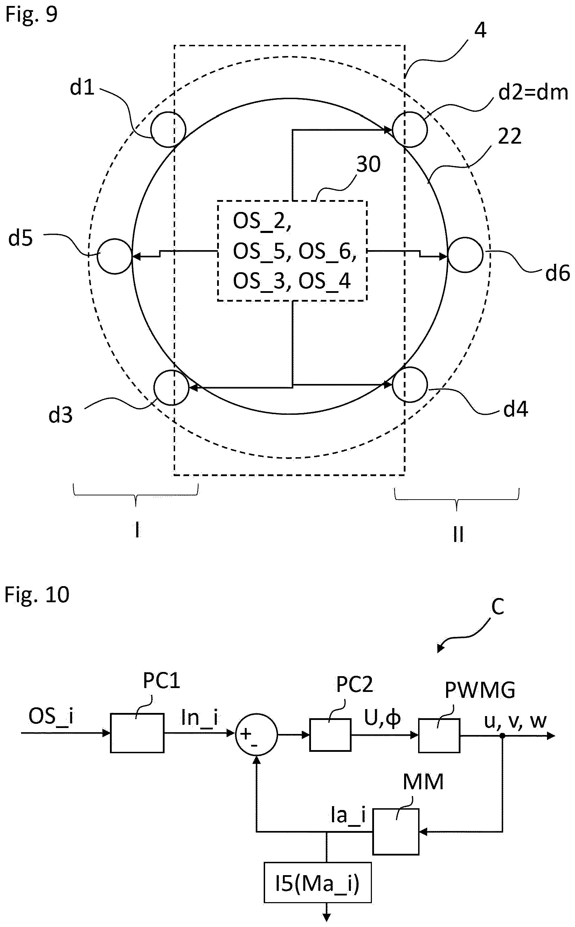

The control system realizes a turbine control module TC and a yaw control module YC. Fourth information I4, which is representative of the position setpoint Pn of the carrier 4, is provided by the turbine control module TC and transmitted to the yaw control module YC. Depending on this fourth information I4 and tenth information I10, a position controller P1 determines seventh information I7. The seventh information I7 is representative of rotational speed setpoints Rn_1 to Rn_6, Rn_i for short, of the drives di. Depending on this seventh information I7, speed controllers P2 determine and generate operating setpoints OS_i, which are, e.g., torque setpoints. Drive control modules C convert the torque setpoints OS_i into actual electric signals with which the drives di are operated so that the drives di bring or keep the carrier 4 at the position setpoint Pn. The drive control modules C are explained in more detail in connection with figure 10.

The tenth information I10 is representative of the actual position Pa of the carrier 4 and can be determined, for example, with the help of the incremental encoder 23 as described in connection with figure 3. The tenth information I10 and the fourth information I4 are used in a negative feedback loop. From the deviation between the actual position Pa and the position setpoint Pn, the position controller P1 determines the seventh information I7.

Moreover, in order to achieve that the drives di rotate with the rotational speed setpoints Rn_i, ninth information I9 is provided which is representative of the actual rotational speeds Ra_i of the drives di. The ninth information I9 can be determined with the help of the incremental encoders 24, as explained in connection with figure 3. The ninth information I9 is used together with the seventh information I7 in negative feedback loops in order to minimize the respective differences between the rotational speed setpoints Rn_i and the actual rotational speeds Ra_i. The speed controllers P2 determine the operating setpoints OS_i depending on the deviation between the actual rotational speeds Ra_i and the rotational speed setpoints Rn_i.

As mentioned before, the drives d1, d2 may be operated such that they exert different torques. For this purpose, sixth information I6 is provided which is representative of a torque difference setpoint ΔMn. The torque difference setpoint ΔMn is compared to the actual torque difference ΔMa between the actual torques Ma_i of the drives. The actual torque difference ΔMa can be derived from fifth information I5 which is representative of the actual torques Ma_i of the drives di. The actual torques Ma_i of the drives di can be extracted from drive control modules C used for operating the drives by using the electric signals with which the motors are actually operated.

Depending on the fifth I5 and the sixth I6 information, eighth information I8 is determined using a negative feedback loop. The eighth information I8 is representative of an offset rotational speed ΔRn and is determined with the help of a tension controller P4 depending on the deviation between the actual torque difference ΔMa and the torque difference setpoint ΔMn. For example, the offset rotational speed ΔRn is determined such that it increases with increasing difference between the torque difference setpoint ΔMn and the actual torque difference.

As can be seen in figure 6, the offset rotational speed ΔRn is subtracted from the rotational speed setpoint Rn_1 determined for drive d1 and the resulting value of the rotational speed is used as the rotational speed setpoint Rn_2 for the drive d2. In this way, a torque difference can be realized between drive d1 and drive d2 in which the value of the torque exerted by the drive d2 is always smaller or at most equal to the value of the torque exerted by drive d1. This is because the drive d1 is operated as the master drive dm.

The operation of the drives di according to the operating setpoints OS_i results in operation parameters P_i for the drives di, which, stored in the first information I1, are evaluated by the turbine control module TC. The turbine control module TC executes, for example, the steps described in connection with figure 5 or the steps described for the right branch of figure 8. Particularly, the turbine control module TC then executes the first measure M1. Here, the first measure M1 comprise, inter alia, an automatic change of a setting in the yaw control module YC such that the second drive d2 becomes the master drive (see figure 9). Moreover, the first measure M1 causes an automatic change of the operation of the wind turbine 100 from a first operation mode in which all six drives are used for controlling the position of the carrier 4 (see figure 4) to an operation in a second operation mode in which only five drives, namely drives d2 to d6, are further used for controlling the position of the carrier 4 and in which drive d1 is permanently disabled (see figure 9).

Furthermore, executing the first measure M1 comprises a generation of an electric signal which is transmitted to a warning device D of the control system. The warning device D may be a display. The electric signal processed by the warning device D results in a warning signal which is noticeable by an operator. For example, the warning signal is a visual presentation on the display that drive d1 is damaged or critical, respectively.

Figure 10 illustrates the operation of a drive control module C. A current converter PC1 determines a current setpoint In_i depending on the operating setpoint OS_i, which is the torque setpoint in this example. A further controller PC2 (e.g. a PI-controller) determines an absolute voltage value U and a phase shift ϕ depending on the current setpoint In_i and the actual current Ia_i. PWM-generators PWMG generate corresponding PWM signals with which IGBTs (not shown) are energized. The output thereof is three different phases u, v, w with which the drives di are then operated. Moreover, a motor model MM determines, depending on the phases u, v, w, the actual current Ia_i. The actual current Ia_i and the current setpoint In_i are used in a negative feedback loop to adapt the voltage value U and the phase shift ϕ. Furthermore, the fifth information I5 is determined depending on the determined actual current Ia_i.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference sign list:

- 1: first rotor blade
- 2: second rotor blade
- 3: third rotor blade
- 4: nacelle carrier
- 10: rotor
- 11: electric motor
- 12: gearbox
- 13: pinion
- 14: break caliper
- 20: tower
- 21: brake disc
- 22: yaw bearing
- 23: incremental encoder
- 24: incremental encoder
- 25: temperature sensor
- 30: control system
- 40: nacelle
- 100: wind turbine
- 104: foundation
- 112: rotor hub

- I1: first information
- I2: second information
- I3: third information
- I4: fourth information
- I5: fifth information
- I6: sixth information
- I7: seventh information
- I8: eights information
- I9: ninth information
- I10: tenth information
- M1: first measure
- M2: second measure

- P_i: operation parameter
- I: first group of drives
- II: second group of drives
- Pa: operation parameter average
- Pa_I: operation parameter average of group I
- Pa_II: operation parameter average of group II
- T: defined threshold

- TC: turbine control module
- YC: yaw control module
- D: warning device
- OS_i: operating setpoint
- di: drive
- dm: master drive
- Pn: position setpoint
- Pa: actual position
- ΔMn: torque difference setpoint
- ΔMa: actual torque difference
- Rn_i: rotational speed setpoint
- Ra_i: actual rotational speed
- Ma_i: actual torque
- ΔRn: rotational speed offset

- C: motor control module
- PC1: current converter
- PC2: further controller
- U: absolute voltage
- Φ: phase shift
- In_i: current setpoint
- Ia_i: actual current
- PWMG: PWM generator
- u, v, w: phases
- MM: motor model

## Claims

1. Method for operating a wind turbine (100) with a rotatable component (1 to 4) and N drives (di) for rotating the rotatable component (1 to 4) by exerting torques, wherein N ≥ 2 and wherein the method comprises
- providing first information (I1) which is representative of at least one operation parameter (P_i) of each drive (di),
- determining second information (I2) depending on the first information (I1), wherein the second information (I2) is representative of an operation parameter average (Pa, Pa_I, Pa_II) averaged over at least two drives (di),
- determining third information (I3) depending on the first (I1) and the second information (I2), wherein the third information (I3) is representative of whether the operation parameter (P_i) of at least one drive (d1) differs from the operation parameter average (Pa, Pa_I, Pa_II) by more than a defined threshold (T), and, if this is the case,
- executing a first measure (M1) which is configured to cause maintenance of the at least one drive (di) and/or which is configured to cause a change of the operation of the wind turbine (100).

2. Method according to claim 1, wherein
- the at least one operation parameter (P_i) is
- the temperature of an electric motor (11) of the respective drive (di) and/or
- the electric current with which the electric motor of the respective drive (di) is operated and/or
- a torque of the respective drive (di).

3. Method according to claim 1 or 2, wherein
- the at least one operation parameter (P_i) is a time-averaged and/or filtered parameter.

4. Method according to any one of the preceding claims, wherein
- the first measure (M1) is configured to cause the generation of a warning signal for an operator so that the operator can schedule maintenance of the at least one drive (d1) .

5. Method according to any one of the preceding claims, wherein
- the first measure (M1) is configured to cause a change of the operation of the wind turbine (100) from a first operation mode in which the N drives are used to control the position of the rotatable component (1 to 4) into a second operation mode in which the one drive (d1) is permanently disabled and only the remaining N-1 drives are used to control the position of the rotatable component (1 to 4).

6. Method according to any one of the preceding claims, wherein
- the first measure (M1) comprises changing a control parameter of the wind turbine (100) in order to change the operation of the wind turbine (100), wherein the control parameter is at least one of
- a rotor speed setpoint,
- a generator power setpoint,
- a maximum allowed wind speed,
- a maximum allowed external torque.

7. Method according any one of the preceding claims, wherein the method further comprises
- providing fourth information (I4) which is representative of a position setpoint (Pn) of the rotatable component (1 to 4),
- determining operating setpoints (OS_i) for the drives (di) depending on the fourth information (I4) such that, when the drives (di) are operated according to the operating setpoints (OS_i),
- the drives (di) bring or keep the rotatable component (1 to 4) at the position setpoint (Pn) by exerting torques.
- providing fifth information (I5) which is representative of the actual torque difference (ΔMa) between the actual torques (Ma_i) exerted by the drives (di),
- providing sixth information (I6) which is representative of a torque difference setpoint (ΔMn) between the torques exerted by the drives (di), wherein the torque difference setpoint (ΔMn) is different from zero, wherein
- the operating setpoints (OS_i) are determined also depending on the fifth (I5) and the sixth (I6) information, namely by using a feedback loop with the fifth (I5) and the sixth (I6) information as input information so that the difference between the torque difference setpoint (ΔMn) and the actual torque difference (ΔMa) is minimized.

8. Method according to claim 7, wherein
- the wind turbine (100) comprises at least four drives (di),
- the drives (di) are assigned to at least two different groups (I, II) so that each group (I, II) is assigned at least two drives (di),
- the second information (I2) is determined such that it is representative of an operation parameter average (Pa_I, Pa_II) for each group (I, II),
- the operating setpoints (OS_i) are determined such that, when the drives (di) are operated according to the operating setpoints (OS_i), all drives assigned to the same group (I, II) always exert the same torques and drives (di) assigned to different groups (I,II) exert different torques,
- for determining the third information (I3), the operation parameter (P_i) of each drive (di) is compared only to the operation parameter average (Pa_I, Pa_II) of the group (I, II) to which it is assigned.

9. Method according to any one of claims 7 or 8,
wherein
- before executing the first measure (M1), the at least one drive (d1) is the master drive (dm) which means that the operating setpoints (OS_i) are determined such that, when the drives (di) are operated according to the operating setpoints (OS_i), the value of the torque exerted by the master drive (dm) is always greater than or at least equal to the value of the torque exerted by the one or more other drives (di),
- the first measure (M1) comprises changing the master drive (dm) .

10. Method according to any one of the preceding claims, wherein the rotatable component (1 to 4) is a component (4) of a yaw system of the wind turbine (100).

11. Method according to any one of the preceding claims, further comprising
- operating the wind turbine (100),
- executing the first measure (M1),
- executing a second measure (M2) in reaction to the first measure (M1), wherein the second measure (M2) is performing maintenance of the at least one drive (di).

12. Computer program comprising instructions which, when the program is executed by a control system, cause the control system to carry out the method of any one of claims 1 to 10.

13. Computer-readable data carrier having the computer program of claim 12 stored thereon.

14. Control system (30) comprising means for executing the method according to any one of claims 1 to 10.

15. Control system (30) according to claim 14, wherein the control system (30) comprises means with the help of which
- the temperatures of the electric motors (11) of the drives (di) can be determined and/or
- the electric currents with which the electric motors are operated can be determined and/or
- the torques of the drives (di) can be determined.

16. Wind turbine (100) comprising
- a rotatable component (1 to 4),
- N drives (di) for rotating the rotatable component (1 to 4) by exerting torques, wherein N ≥ 2,
- the control system (30) according to any one of claims 14 or 15.
